# EUROPÄISCHE PATENTANMELDUNG

(11) **EP 2 789 761 A1**
(43) Veröffentlichungstag der Anmeldung: **15.10.2014**
(21) Anmeldenummer: 13162713.5
(22) Anmeldetag: 08.04.2013
(51) Int. Cl.: E04B 7/22, F24J 2/04

(54) **Gebäudeschutz- und verkleidungselement**

(71) Anmelder: European Investment Group B.V., 5657 EA Eindhoven (NL)
(72) Erfinder: Upphoff, Fritz, 50968 Köln (DE)

(57) **Zusammenfassung**

Die Erfindung betrifft ein selbsttragendes Gebäudeschutz- und verkleidungselement, eine modulare Gebäudeverkleidung, ein Heizungssystem und ein Verfahren zur Montage der modularen Gebäudeverkleidung.

## Beschreibung

Die Erfindung betrifft ein selbsttragendes Gebäudeschutz- und verkleidungselement, eine modulare Gebäudeverkleidung, ein Heizungssystem und ein Verfahren zur Montage der modularen Gebäudeverkleidung.

Bislang wurde ein Dach traditionell so gedeckt, dass unter den auf Dachsparen verlegten Dachziegeln eine Isolierung vorgesehen wurde und unter die Isolierung eine Dampfsperre zum Innenraum des Gebäudes hin angebracht wurde. Wollte der Bauherr die Sonnenenergie zur Warmwasserbereitung nutzen, so musste er bislang auf die Dachziegel Wärmekollektoren montieren, die wiederum mit einem Schlauch- oder Rohrsystem mit dem Warmwasserkreislauf verbunden werden mussten.

Die Aufgabe der vorliegenden Erfindung ist es daher, eine Technologie bereitzustellen, mit der ein Dach oder eine Fassade kosten-, energie- und zeiteffizient abgedeckt werden kann und gleichzeitig Warmwasser gewonnen werden kann.

Die der Erfindung zu Grunde liegende Aufgabe wird in einer ersten Ausführungsform gelöst durch ein selbsttragendes Gebäudeschutz- und verkleidungselement mit einer dem Gebäude abgewandten Außenfläche, einer dem Gebäude zugewandten Innenfläche und Seitenflächen enthaltend
a. wenigstens 50 Vol.% Hartschaum,
b. wenigstens eine Flüssigkeitsleitung, die von der Außenfläche 0 bis 5 cm beabstandet ist und deren Einlass und Auslass jeweils in einer der Seitenflächen angeordnet ist,
c. eine Bewehrung aus Kunststoff, Metall, Kohlenstoff und/oder Keramik.

Die Volumenprozent an Hartschaum sind so definiert, dass das Porenvolumen des Hartschaums ebenfalls als Volumenprozent des Hartschaums berücksichtigt wird. Das Gesamtvolumen des Gebäudeschutz- und verkleidungselements kann beispielsweise so gemessen werden, dass es nach Versiegelung der Ein- und Auslässe in Wasser versenkt wird und die Volumenänderung gemessen wird. Der prozentuale Anteil des Hartschaums am Gesamtvolumen kann beispielsweise so gemessen werden, indem man den Hartschaum vollständig aus dem Gebäudeschutz- und verkleidungselement entfernt und in Wasser versenkt. Die Volumenänderung entspricht dann dem Volumenanteil des Hartschaums.

Durch das erfindungsgemäße Gebäudeschutz- und verkleidungselement ist es erstmals möglich, mit einem einzigen Bauelement die gesamten Funktionen der Dach- bzw. Fassadenabedeckung zu erfüllen und gleichzeitig Warmwasser und/oder Energie zu erzeugen. Zusätzlich zu dem erfindungsgemäßen Gebäudeschutz- und verkleidungselement ist beispielsweise zur Dacheindeckung keine weitere Komponente notwendig. Gleichzeitig kann beispielsweise Wasser durch die nah an oder auf der Außenfläche gelegenen Flüssigkeitsleitungen geleitet werden, so dass sich das Wasser erwärmt und beispielsweise eine Heizung jeglicher Art betrieben werden kann.

Vorzugsweise sind an wenigstens einer Fläche Montageelemente, insbesondere Laschen, Ösen, Haken, Stecksysteme, Dübel und/oder Bleche, angeordnet. Besonders bevorzugt sind die Montagelemente an wenigstens zwei gegenüberliegenden Seitenflächen angeordnet. Alternativ können die Gebäudeschutz- und verkleidungselemente auch verklebt sein. Dadurch kann das Gebäudeschutz- und verkleidungselement besonders leicht an der Fassade oder auf dem Dach montiert werden. Zudem hat der Hersteller der Gebäudeschutz- und verkleidungselemente durch die produktionsseitig angebrachten Gebäudeschutz- und verkleidungselemente eine bessere Kontrolle darüber, dass durch die Montage keine Kältebrücken entstehen.

Beispielsweise können seitlich an den Gebäudeschutz- und verkleidungselementen Metalllaschen oder Bleche mit vorgestanzten Löchern angebracht sein, damit diese leicht mit Nägeln oder Schrauben beispielsweise an Dachlatten oder -sparren befestigt werden können. Beispielsweise können auch Haken oder Ösen und auf dem Dach oder der Fassade das jeweilige Gegenstück angebracht sein, so dass die Gebäudeschutz- und verkleidungselemente leicht auf dem Dach oder der Fassade einfach eingehängt werden. Auch können beispielsweise an den Seitenflächen Schraubengewinde senkrecht zur Seitenfläche vorgesehen sein. Diese erlauben es, die Gebäudeschutz- und verkleidungselemente miteinander oder mit Haltevorrichtungen auf dem Dach oder der Fassade zu verschrauben.

Die Montageelemente sind vorzugsweise so angebracht, dass zur Außenfläche hin keine Kältebrücke entsteht. Beispielsweise ist das Montageelement (beispielsweise eine Lasche) mittels einer Wärmeisolierung am Gebäudeschutz- und verkleidungselement befestigt, insbesondere mit einer Bewehrung kraft- oder stoffschlüssig verbunden.

Vorzugsweise ist die Bewehrung ein Gitter oder eine Matte, insbesondere in den Schaum eingebettet. Dadurch kann gewährleistet werden, dass die Bewehrung vollständig mit Hartschaum umgeben ist und dadurch die Wahrscheinlichkeit verringert wird, dass eine Kältebrücke entsteht.

Vorzugsweise weist das Gebäudeschutz- und verkleidungselement 2 bis 7 Bewehrungselemente ausgewählt aus Gittern und/oder Matten auf.

Vorzugsweise ist die Bewehrung mit den Montagelementen kraftschlüssig oder stoffschlüssig verbunden. Dadurch kann besonders einfach gewährleistet werden, dass das Gebäudeschutz- und verkleidungselement in besonders hohem Maße selbsttragend ist und stabil verbaut werden kann. Vorzugsweise ist die Bewehrung mit der wenigstens einen Flüssigkeitsleitung entweder direkt oder über ein Befestigungselement stoffschlüssig oder kraftschlüssig verbunden. Es hat sich herausgestellt, dass hierdurch die Stabilität des Gebäudeschutz- und verkleidungselements erheblich gesteigert werden kann. Um auszuschließen, dass eine Kältebrücke entsteht, kann zwischen der Flüssigkeitsleitung und dem Gebäudeschutz- und verkleidungselement ein Befestigungselement vorgesehen werden, dass als Wärmeisolator ausgestaltet ist. Dies kann beispielsweise einen Klammerelement aus Kunststoff sein. Beispielsweise kann ein Klammerelement eingesetzt werden, dass einschlägig ist und zum einen die Flüssigkeitsleitung umklammert und zum anderen die Bewehrung umklammert.

Vorteilhafterweise ist auf der Außenfläche wenigstens ein Außenelement angebracht, das ausgewählt ist aus Glasplatte, Photovoltaikmodul, Dachschindel, Dachziegel und/oder Dachlatten. Dieses Außenelement kann mit dem Hartschaum beispielsweise an die Außenfläche angeschäumt oder verklebt sein. Wird beispielsweise bei der Herstellung des Gebäudeschutz-und verkleidungselements der Hartschaum erzeugt, kann vor der Aushärtung des Hartschaums das wenigstens eine Außenelement aufgelegt werden, was mit der Aushärtung des Hartschaums dadurch fest mit dem Gebäudeschutz- und verkleidungselement verbunden wird. Auf diese Weise kann eine vollständige Dachabdeckung sehr einfach hergestellt werden. Ist das Außenelement ein Photovoltaikmodul, so hat diese Ausführungsform auch den zusätzlichen Vorteil, dass die so befestigten Photovoltaikmodule im Unterschied zum Stand der Technik praktisch nicht mehr entwendet werden können. Dies ist nämlich ein erhebliches Problem bei bisherigen Photovoltaikmodulen, die auf Hausdächern montiert sind. Diese ließen sich bislang einfach abschrauben. Mit der vorliegenden Ausführungsform sind die Photovoltaikmodule fest mit dem Dach verklebt.

Vorzugsweise sind im erfindungsgemäßen Gebäudeschutz- und verkleidungselement wenigstens 80 Vol.% Hartschaum, insbesondere wenigstens 90 Vol.% Hartschaum enthalten. Die sorgt dafür, dass das erfindungsgemäße Gebäudeschutz- und verkleidungselement eine besonders effiziente Wärmeisolierung darstellt.

Das erfindungsgemäße Gebäudeschutz- und verkleidungselement kann beispielsweise auf dem Dach oder an der Fassade montiert sein.

Die wenigstens eine Flüssigkeitsleitung ist vorzugsweise nicht außen liegend. Nicht außen liegend im Sinne der Erfindung meint, dass die Flüssigkeitsleitung nicht über die Außenfläche hinaus ragt. Besonders bevorzugt schließt die wenigstens eine Flüssigkeitsleitung mit der Außenfläche ab. Dies hat den besonderen Vorteil, dass die Flüssigkeitsleitung in den Hartschaum eingebettet ist und dadurch vor Beschädigungen geschützt ist, aber trotzdem so weit an der Oberfläche liegt, dass die Wärme der Außenfläche gut aufgenommen werden kann.

Die wenigstens eine Flüssigkeitsleitung erstreckt sich vorteilhafterweise von der oberen Seitenfläche zur unteren Seitenfläche. Dies kann beispielsweise in einer geraden Linie aber auch in einem Wendel geschehen.

Die wenigstens eine Flüssigkeitsleitung ist beispielsweise aus Kunststoff oder Metall. Vorzugsweise ist die Flüssigkeitsleitung aus Kupfer oder Aluminium, da so die Wärme von der Außenfläche besonders leicht aufgenommen werden kann.

Der Innendurchmesser der wenigstens einen Flüssigkeitsleitung liegt vorzugsweise in einem Bereich von 1 bis 2 cm. Ist der Innendurchmesser kleiner, können sich die Leitungen zusetzen. Ist der Innendurchmesser größer, wird in der Regel ein zu großer Druck gebraucht, um die Flüssigkeit durch die Leitungen zu pumpen.

Sind in einem Gebäudeschutz- und verkleidungselement mehrere Flüssigkeitsleitungen angeordnet oder verschiedene Bahnen eines Wendels nebeneinander angeordnet, haben diese Leitungen bzw. Bahnen vorzugsweise einen Abstand in einem Bereich von 10 bis 40 cm insbesondere in einem Bereich von 20 bis 30 cm. Dieser Abstand hat sich nach zahlreichen Versuchen als optimal herausgestellt, um eine maximale Wärmeaufnahme bei möglichst geringem benötigtem Druck zu erzielen.

Ist die Flüssigkeitsleitung aus Kunststoff, liegt die Wandstärke vorzugsweise in einem Bereich von 1 bis 2 mm. Ist die Flüssigkeitsleitung aus Metall, liegt die Wandstärke vorzugsweise in einem Bereich von 0,2 bis 1 mm. Liegt die Wandstärke darunter, so werden die Rohre für diese Anwendung möglicherweise instabil. Liegt die Wandstärke darüber, ist die Wärmeaufnahme geringer.

Liegt die Flüssigkeitsleitung als Wendel vor, so ist in der Außenfläche im Hartschaum vorzugsweise genau die Form des Wendels ausgespart. Dadurch kann entweder bei der Herstellung des Gebäudeschutz- und verkleidungselements oder auf der Baustelle der Wendel in den Hartschaum einfach hineingedrückt werden.

Der Ein- und Auslass kann alternativ auch auf derselben Fläche angeordnet sein. Dies ist besonders vorteilhaft für die Elemente, die unmittelbar unter einem Dachfirst angeordnet werden, da dann die Flüssigkeit wieder in das gleiche Element zurückgeleitet werden kann, aus dem die Flüssigkeit zugeleitet wurde.

Vorzugsweise weist das Gebäudeschutz- und verkleidungselement vorzugsweise daher auch wenigstens zwei Flüssigkeitsleitungen auf, damit die vom Dachfirst zurückgeleitete Flüssigkeit auch wieder über alle aneinanderliegenden Elemente nach unten abgeführt werden kann.

Die Außenfläche hat vorzugsweise eine Dimension in einem Bereich von 0,5 bis 3 m², insbesondere in einem Bereich von 0,6 bis 1,5 m². Das erfindungsgemäße Gebäudeschutz- und verkleidungselement hat vorzugsweise eine Breite in einem Bereich von 0,5 bis 3 m, insbesondere in einem Bereich von 0,8 bis 1,2 m. Das Gebäudeschutz- und verkleidungselement hat vorzugsweise einen Dicke in einem Bereich von 5 bis etwa 25 cm, insbesondere in einem Bereich von 10 bis etwa 15 cm. Die Länge des Gebäudeschutz- und verkleidungselements liegt vorzugsweise in einem Bereich von 20 cm bis 3 m, insbesondere in einem Bereich von 40 cm bis 1,5 m. Das Flächengewicht des Gebäudeschutz- und verkleidungselements liegt vorzugsweise in einem Bereich von 2 bis 4,5 kg/ m².

Diese vorgenannten Dimensionen des erfindungsgemäßen Gebäudeschutz-und verkleidungselements haben sich als besonders praktisch in der Handhabung und besonders effizient bei der Verkleidung von Dächern und Fassaden herausgestellt.

Der Hartschaum ist vorzugsweise ein Hartschaum aus Polystyrol, insbesondere aus dem Material Neopor^{®}. Der Hartschaum hat vorzugsweise einen Raumgewicht in einem Bereich von 17 bis 25 kg/m³.

Der Hartschaum ist vorzugsweise feuerfest ausgerüstet. Beispielsweise kann auch auf der Innenfläche eine Feuerschutzfolie aufkaschiert werden. Auf der Innenfläche kann auch eine Gipsfaserplatte angeordnet werden.

Vorzugsweise weisen die linke und die rechte Seitenfläche jeweils ein treppenförmiges Profil auf. Das Profil kann so ausgestaltet sein, dass die Außenfläche die maximale Breite des Gebäudeschutz- und verkleidungselements aufweist und die Innenfläche eine Breite aufweist, die 2 bis 10 cm geringer ist. Das Profil kann mehrere Stufen aufweisen, weist vorzugsweise aber nur eine Stufe auf. Diese Stufe befindet sich vorzugsweise in einem Bereich von 2 cm von der Innenfläche entfernt bis zur mittleren Dicke des Gebäudeschutz- und verkleidungselements. Diese Ausgestaltung hat den besonderen Vorteil, dass die Gebäudeschutz- und verkleidungselemente auf einem Dach genau zwischen die Sparren oder Dachlatten aufgelegt werden können, so dass sich die Gebäudeschutz- und verkleidungselemente beispielsweise an der Außenfläche nahtlos aneinander anschließen und sie dennoch seitlich nicht verrutschen können. Benachbarte Gebäudeschutz- und verkleidungselemente können vorzugsweise miteinander verzapft sein.

Der Einlass und der Auslass der wenigstens einen Flüssigkeitsleitung ist so angeordnet, dass bei zwei aufeinanderfolgenden Gebäudeschutz- und verkleidungselementen der Einlass des einen Gebäudeschutz- und verkleidungselements mit dem Auslass des anderen Gebäudeschutz- und verkleidungselements verbunden werden kann. Vorzugsweise ist daher der Einlass und der Auslass jeweils als komplementäre Steckverbindung ausgestaltet.

Auf der Innenfläche kann beispielsweise auch eine Dampfsperre angeordnet sein. Diese kann entweder beispielsweise direkt auf die Innenfläche mit einem doppelten Klebeband aufgebracht sein. Alternativ kann die Dampfsperre auch durch Abstandselemente von der Innenfläche beabstandet sein.

In einer weiteren Ausführungsform wird die der Erfindung zu Grunde liegende Aufgabe gelöst durch eine modulare Gebäudeverkleidung bestehend aus den erfindungsgemäßen selbsttragenden Gebäudeschutz- und verkleidungselementen.

Erstmals kann mit der erfindungsgemäßen integrierten Gebäudeverkleidung auf die bislang notwendigen vielen einzelnen Komponenten bei der Gebäudeverkleidung verzichtet werden. Zudem kann beispielsweise Warmwasser gewonnen werden.

Vorzugsweise sind die Einlässe der Gebäudeschutz- und verkleidungselemente mit den Auslässen der benachbarten Gebäudeschutz- und verkleidungselemente ineinander geschoben oder ineinander gesteckt. Vorzugsweise sind die Einlässe der Gebäudeschutz- und verkleidungselemente mit den Auslässen der benachbarten Gebäudeschutz- und verkleidungselemente verklebt oder mit einer Gummidichtung abgedichtet. Dies hat den besonderen Vorteil, dass die modulare Gebäudeverkleidung besonders einfach montiert werden kann.

Für den Fall dass die modulare Gebäudeverkleidung auf Trägerstrukturen wie beispielsweise Balken aufgesetzt ist, sind die benachbarten Elemente vorzugsweise untereinander verschraubt, verzapft und/oder verklebt.

Bei der erfindungsgemäßen modularen Gebäudeverkleidung müssen die Elemente sich beispielsweise nicht vollständig kontinuierlich aneinander anschließen. Vielmehr können die erfindungsgemäßen Gebäudeschutz- und verkleidungselemente beispielsweise voneinander durch Abstandselemente beabstandet sein.

In der modulare Gebäudeverkleidung können auch Gebäudeschutz- und verkleidungselemente enthalten sein, die keine Flüssigkeitsleitungen enthalten und die dann bei Bedarf zugeschnitten werden können, um die Form der Fassade bzw. des Daches exakt abdecken zu können.

In einer weiteren Ausführungsform wird die der Erfindung zu Grunde liegende Aufgabe gelöst durch ein Heizungssystem umfassend wenigstens ein erfindungsgemäßes Gebäudeschutz- und verkleidungselement oder eine erfindungsgemäße modulare Gebäudeverkleidung und einen damit über Flüssigkeitsleitungen direkt oder über einen Wärmetauscher verbundenen Boiler oder Warmflüssigkeitsspeicher.

Es versteht sich aber auch, dass das erfindungsgemäße Gebäudeschutz-und verkleidungselement und die modulare Gebäudeverkleidung mit jeder Art der Energieaufbereitung kombinierbar ist.

Bei dem Warmflüssigkeitsspeicher handelt es sich beispielsweise um einen Warmwasserspeicher. Der Boiler oder Warmflüssigkeitsspeicher ist vorzugsweise unter dem Dach montiert. Dadurch ist es nicht notwendig, Flüssigkeitsleitungen in den Keller zu verlegen, wo üblicherweise eine Heizung angeordnet ist.

In einer weiteren Ausführungsform wird die der Erfindung zu Grunde liegende Aufgabe gelöst durch ein Verfahren zur Montage der modularen Gebäudeverkleidung, wobei man die erfindungsgemäßen Gebäudeschutz- und verkleidungselemente auf einem Dach oder an einer Fassade anbringt.

Werden die Gebäudeschutz- und verkleidungselemente auf einem Dach angebracht, so werden die Gebäudeschutz- und verkleidungselemente vorzugsweise auf Dachsparren oder zwischen Dachsparren angeordnet.

Die Gebäudeschutz- und verkleidungselemente gemäß der Erfindung können aber müssen nicht kontinuierlich nebeneinander verlegt werden. Zwischen den Gebäudeschutz- und verkleidungselementen können zumindest teilweise beispielsweise Abstandselemente angeordnet sein.

Die Fugen zwischen den erfindungsgemäßen Gebäudeschutz- und verkleidungselementen und den benachbarten Elementen werden vorzugsweise abgedichtet. Dies kann beispielsweise durch Schaum wie beispielsweise PU-Schaum geschehen. Alternativ können zwischen den Gebäudeschutz-und verkleidungselementen Dehnfugen belassen werden. Diese können beispielsweise mit elastischen Elementen wie beispielsweise Dichtlippen abgedeckt werden. Diese elastischen Elemente können beispielsweise an beide benachbarten Gebäudeschutz- und verkleidungselemente angeformt sein und sich insbesondere überlappen.

Benachbarte Gebäudeschutz- und verkleidungselemente können vorzugsweise auch direkt miteinander verbunden sein. Dies kann vorzugsweise über vorgefertigte Aufnahmepunkte geschehen. Hierfür können die benachbarten Gebäudeschutz- und verkleidungselemente miteinander verzapft sein.

Besonders bevorzugt wird auf die Trägerstruktur (beispielsweise ein Dach mit Dachsparren oder eine Fassade), auf die die modulare Gebäudverkleidung montiert wird, ein Lattensystem aufgebracht. Dieses Lattensystem ist vorzugsweise aus Holz. Die Latten in diesem Lattensystem sind vorzugsweise genau gleich voneinander beabstandet. Dies hat den Vorteil, dass die Gebäudeschutz- und verkleidungselemente nur in einer einzigen Breite bzw. Höhe hergestellt werden müssen und dann auf dieses genormte Lattensystem aufgebracht werden können. Bei einem Sparrendach wird vorzugsweise ein horizontal verlaufendes Lattensystem aufgebracht. Auf ein Pfettendach wird vorzugsweise ein vertikales Lattensystem aufgebracht.

Die folgenden Figuren dienen der Erläuterung und Veranschaulichung der Erfindung. Es versteht sich, dass die konkreten Ausgestaltungen nicht den Schutzbereich der Ansprüche beschränken sollen.
Fig. 1 zeigt die modulare Gebäudeverkleidung
Fig. 2 zeigt das Gebäudeschutz- und verkleidungselement

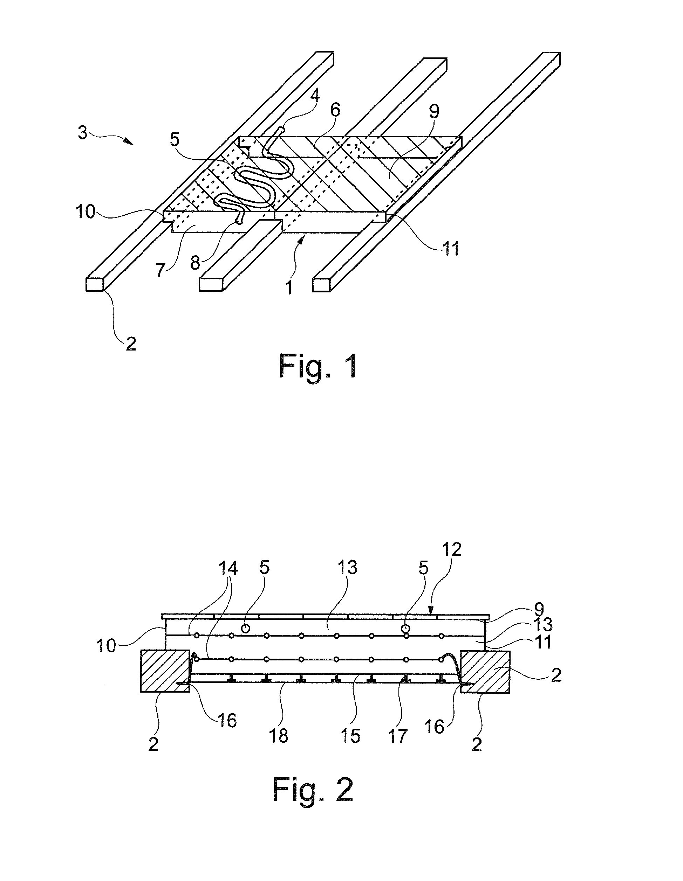

Fig. 1 zeigt ein Gebäudeschutz- und verkleidungselement 1, das auf Dachsparren 2 aufliegt. Es ist auch ein weiteres Gebäudeschutz- und verkleidungselement 1 neben dem ersten Gebäudeschutz- und verkleidungselement 1 abgebildet. Viele Gebäudeschutz- und verkleidungselemente 1 bilden so die modulare Gebäudeverkleidung 3. Man kann den Einlass 4 der Flüssigkeitsleitung 5 erkennen, der an der oberen Seitenfläche 6 vorgesehen ist. In der unteren Seitenfläche 7 kann man einen Auslass 8 der Flüssigkeitsleitung 5 erkennen. Die Flüssigkeitsleitung 5 schließt mit der Außenfläche 9 ab.Es ist gut erkennbar, dass die linke Seitenfläche 10 und die rechte Seitenfläche 11 jeweils ein treppfenförmiges Profil aufweisen. Die Stufe ist in der Mitte der Dicke des Gebäudeschutz- und verkleidungselements 1, so dass die Gebäudeschutz- und verkleidungselemente einerseits direkt aneinander angrenzen und andererseits sicher auf den Dachsparren 2 aufliegen können.

Fig. 2 zeigt ein Gebäudeschutz- und verkleidungselement 1 im Querschnitt. Erkennbar sind die auf der Außenfläche 9 aufliegenden Außenelemente 12 in diesem Fall in Form von Dachplanken. Unmittelbar unterhalb der Außenfläche 9 sieht man im Hartschaum 13 eingebettet die Flüssigkeitsleitungen 5. Dies können Wasserleitungen sein. Im Hartschaum 13 eingebettet sind auch zwei Bewehrungsgitter 14 aus Stahl. In der linken 10 und rechten 11 Seitenfläche kann man deutlich das treppenförmige Profil erkennen, womit das Gebäudeschutz- und verkleidungselement 1 auf den Dachsparren 2 aufliegen kann. Die Innenfläche 15 schließt in diesem Fall nicht ganz mit den Dachsparren 2 ab. Das unterste Bewehrungsgitter 14 befindet sich praktisch in der Mitte des Gebäudeschutz- und verkleidungselements 1. Dieses Bewehrungsgitter 14 ist an den Seiten mit den Befestigungslaschen aus Stahl 16 verschweißt. Diese können mit Nägeln in den Balken und Dachsparren 2 leicht befestigt werden. An der Innenfläche 15 sind Abstandselemente 17 für die Dampfsperre 18 angeordnet.

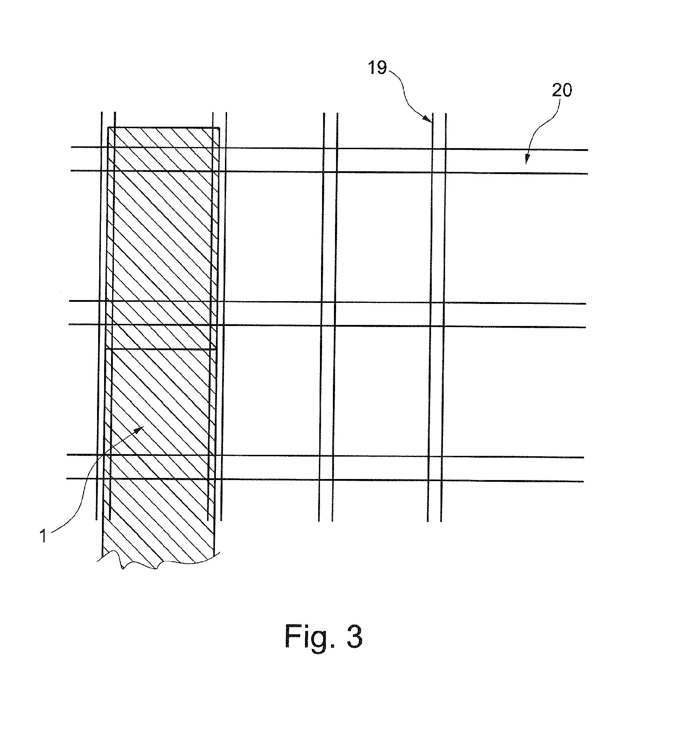

Fig. 3 zeigt das Lattensystem aus Latten 19 (auch Konterlatten genannt) auf einem Pfettendach mit den Pfetten 20. Auf den Latten 19 sind die Gebäudeschutz- und verkleidungselemente 1 montiert.

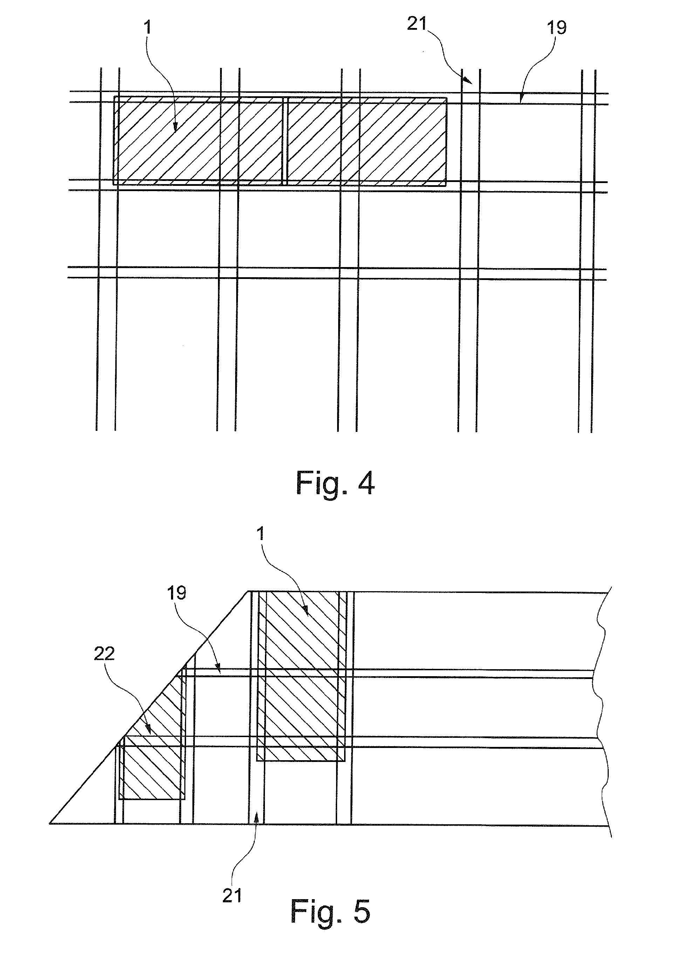

Fig. 4 zeigt das Lattensystem aus Latten 19 (auch Konterlatten genannt) auf einem Sparrendach mit den Sparren 21. Auf den Latten 19 sind die Gebäudeschutz- und verkleidungselemente 1 montiert.

Fig. 5 zeigt das Lattensystem aus Latten 19 (auch Konterlatten genannt) auf einem Walmdach mit den Sparren 21. Auf den Latten 19 sind die Gebäudeschutz- und verkleidungselemente 1 montiert. Hier sind auch Gebäudeschutz- und verkleidungselemente 1 gezeigt, die keine Flüssigkeitsleitungen enthalten und die dann bei Bedarf zugeschnitten werden, um die Form der Fassade bzw. des Daches exakt abdecken zu können. Diese werden auch als Zuschnittelemente 22 bezeichnet.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

1 Gebäudeschutz- und verkleidungselement
2 Dachsparren
3 Modulare Gebäudeverkleidung
4 Einlass
5 Flüssigkeitsleitung
6 Obere Seitenfläche
7 Untere Seitenfläche
8 Auslass
9 Außenfläche
10 Linke Seitenfläche
11 Rechte Seitenfläche
12 Außenelemente
13 Hartschaum
14 Bewehrung
15 Innenfläche
16 Montageelement
17 Abstandselemente für Dampfsperre
18 Dampfsperre
19 Latte
20 Pfette
21 Sparren
22 Zuschnittelement

## Patentansprüche

1. Selbsttragendes Gebäudeschutz- und verkleidungselement (1) mit einer dem Gebäude abgewandten Außenfläche (9), einer dem Gebäude zugewandten Innenfläche (15) und Seitenflächen (6, 7, 10, 11) enthaltend
a. wenigstens 50 Vol.% Hartschaum (13),
b. wenigstens eine Flüssigkeitsleitung (5), die von der Außenfläche (9) 0 bis 5 cm beabstandet ist und deren Einlass (4) und Auslass (8) jeweils in einer der Seitenflächen (6, 7, 10, 11) angeordnet ist,
c. eine Bewehrung (14) aus Kunststoff, Metall, Kohlenstoff und/oder Keramik.

2. Gebäudeschutz- und verkleidungselement (1) gemäß Anspruch 1,
**dadurch gekennzeichnet, dass** an wenigstens einer Fläche (6, 7, 10, 11) Montageelemente (16), insbesondere Laschen, Ösen, Haken, Stecksysteme, Dübel und/oder Bleche, angeordnet sind.

3. Gebäudeschutz- und verkleidungselement (1) gemäß einem der Ansprüche 1 bis 2, **dadurch gekennzeichnet, dass** die Bewehrung (14) ein Gitter oder eine Matte ist, insbesondere in den Hartschaum (13) eingebettet ist.

4. Gebäudeschutz- und verkleidungselement (1) gemäß Anspruch 3, **dadurch gekennzeichnet, dass** die Bewehrung (14) mit den Montagelementen (16) kraftschlüssig oder stoffschlüssig verbunden ist.

5. Gebäudeschutz- und verkleidungselement (1) gemäß einem der Ansprüche 1 bis 4, **dadurch gekennzeichnet, dass** die Bewehrung (14) mit der wenigstens einen Flüssigkeitsleitung (5) entweder direkt oder über ein Befestigungselement stoffschlüssig oder kraftschlüssig verbunden ist.

6. Gebäudeschutz- und verkleidungselement (1) gemäß einem der Ansprüche 1 bis 5, **dadurch gekennzeichnet, dass** auf der Außenfläche (9) wenigstens ein Außenelement (12) angebracht ist, das ausgewählt ist aus Glasplatte, Photovoltaikmodul, Dachschindel, Dachziegel und/oder Dachlatten.

7. Gebäudeschutz- und verkleidungselement (1) gemäß einem der Ansprüche 1 bis 6, **dadurch gekennzeichnet, dass** wenigstens 80 Vol.% Hartschaum (13), insbesondere wengistens 90 Vol.% Hartschaum (13) enthalten sind.

8. Modulare Gebäudeverkleidung (3) bestehend aus selbsttragenden Gebäudeschutz- und verkleidungselementen (1) gemäß einem der Ansprüche 1 bis 7.

9. Heizungssystem umfassend wenigstens ein Gebäudeschutz- und verkleidungselement (1) gemäß einem der Ansprüche 1 bis 7 oder eine modulare Gebäudeverkleidung (3) gemäß Anspruch 8 und einen damit über Flüssigkeitsleitungen direkt oder über einen Wärmetauscher verbundenen Boiler oder Warmflüssigkeitsspeicher.

10. Verfahren zur Montage der modularen Gebäudeverkleidung (3), wobei man die Gebäudeschutz- und verkleidungselemente (1) gemäß einem der Ansprüche 1 bis 7 auf einem Dach oder an einer Fassade anbringt.
